# EUROPEAN PATENT APPLICATION

(11) **EP 4 800 162 A2**
(43) Date of publication of application: **02.09.2026**
(21) Application number: 26192127.4
(22) Date of filing: 19.01.2024
(51) Int. Cl.: C25B 15/08

(54) **HYDROGEN PRODUCTION SYSTEM AND METHOD FOR OPERATING HYDROGEN PRODUCTION SYSTEM**

(30) Priority: 28.03.2023 JP 2023052203
(62) Document number(s) of the earlier application(s) in accordance with Art. 76 EPC: 24778575.1 / 4 667 623
(71) Applicant: Mitsubishi Heavy Industries, Ltd., Chiyoda-ku Tokyo 100-8332 (JP)
(72) Inventor: IWAI, Yasushi, Tokyo, 100-8332 (JP); MATAKE, Norihisa, Tokyo, 100-8332 (JP); KATO, Masayuki, Tokyo, 100-8332 (JP); IRIE, Hiroki, Tokyo, 100-8332 (JP)
(74) Representative: Hoffmann Eitle

(57) **Abstract**

The hydrogen production system comprises a solid oxide electrolysis cell (SOEC) that electrolyzes steam, a steam discharge line through which the steam discharged from the hydrogen electrode of the SOEC passes, a main heat exchanger that generates the steam by heating supply water through heat exchange between the supply water and the steam passing through the steam discharge line, a combustor that combusts a part of hydrogen contained in steam discharged from a hydrogen electrode, a superheater that exchanges heat between the steam generated in the main heat exchanger and the combustion gas generated in the combustor, a gas discharge line through which an exhaust gas discharged from an oxygen electrode of the SOEC passes, a steam bleeding line that allows the steam discharge line and the combustor to communicate with each other, and an exhaust gas bleeding line that allows the gas discharge line and the combustor to communicate with each other.

## Description

### Technical Field

The present disclosure relates to a hydrogen production system and a method for operating the hydrogen production system.

The present application claims the benefit of priority based on Japanese Patent Application No. 2023-052203 filed to the Japanese Patent Office on March 28, 2023, the content of which is incorporated herein by reference.

### Background Art

PTL 1 describes a hydrogen production system that produces hydrogen by electrolyzing steam in a solid oxide electrolysis cell (SOEC). In the hydrogen production system, the steam generated by a boiler is heated by exchanging heat with a gas (including hydrogen generated by electrolysis of steam and unreacted steam) discharged from a hydrogen electrode of the SOEC in a heat exchanger, and is supplied to the hydrogen electrode of the SOEC.

### Citation List

### Patent Literature

[PTL 1] Japanese Patent No. 7039504

### Summary of Invention

### Technical Problem

However, when a range of the steam amount that can be electrolyzed in the SOEC is expanded, a facility such as the boiler or the heat exchanger becomes larger, which causes an increase in operating costs. In addition, when the facility such as the boiler or the heat exchanger is designed under a condition in which the amount of steam electrolyzed in the SOEC is large in consideration of the response to a non-steady operation beyond a normal operating range, the specification may be excessive, and in a normal operating condition in which the amount of steam electrolyzed in the SOEC is less than a design point, there is a probability that the steam may not be consumed, the operating condition of the boiler may be inefficient, or the operating costs may be increased. In addition, during a low-load operation, a temperature of the supplied steam is decreased, electrolytic power is increased, and there is a probability that the operating costs may be increased.

In view of the above circumstances, an object of at least one embodiment of the present disclosure is to provide a hydrogen production system and a method for operating the hydrogen production system capable of suppressing production costs of hydrogen generated by electrolysis of steam in an SOEC and to expand a range of the steam amount that can be electrolyzed.

### Solution to Problem

In order to achieve the above object, according to the present disclosure, there is provided a hydrogen production system including; a solid oxide electrolysis cell (SOEC) that electrolyzes steam; a steam generator that generates the steam by heating supply water; and a combustor that combusts a part of hydrogen contained in steam discharged from a hydrogen electrode of the SOEC, in which the steam generator is configured such that at least a part of the supply water is heated to generate at least a part of the steam by exchanging heat between at least the part of the supply water and a gas containing a combustion gas generated in the combustor.

### Advantageous Effects of Invention

With the hydrogen production system of the present disclosure, in a case where the amount of heat required for generating the steam is insufficient, a part of hydrogen contained in the steam discharged from the hydrogen electrode is combusted in the combustor, and the gas containing the combustion gas generated is heat-exchanged with at least the part of the supply water, so that the amount of generated steam is increased. Therefore, production costs of hydrogen produced by the electrolysis of the steam in the SOEC can be suppressed, and a range of the steam amount that can be electrolyzed can be expanded.

### Brief Description of Drawings

FIG. 1 is a configuration schematic-diagram of a hydrogen production system according to Embodiment 1 of the present disclosure.
FIG. 2 is a configuration schematic-diagram of a modification example of the hydrogen production system according to Embodiment 1 of the present disclosure.
FIG. 3 is a configuration schematic-diagram of another modification example of the hydrogen production system according to Embodiment 1 of the present disclosure.
FIG. 4 is a configuration schematic-diagram of still another modification example of the hydrogen production system according to Embodiment 1 of the present disclosure.
FIG. 5 is a configuration schematic-diagram of a hydrogen production system according to Embodiment 2 of the present disclosure.
FIG. 6 is a configuration schematic-diagram of a modification example of the hydrogen production system according to Embodiment 2 of the present disclosure.
FIG. 7 is a configuration schematic-diagram of another modification example of the hydrogen production system according to Embodiment 2 of the present disclosure.
FIG. 8 is a configuration schematic-diagram of still another modification example of the hydrogen production system according to Embodiment 2 of the present disclosure.
FIG. 9 is a configuration schematic-diagram of still another modification example of the hydrogen production system according to Embodiment 2 of the present disclosure.
FIG. 10 is a configuration schematic-diagram of still another modification example of the hydrogen production system according to Embodiment 2 of the present disclosure.
FIG. 11 is a configuration schematic-diagram of a hydrogen production system according to Embodiment 3 of the present disclosure.

### Description of Embodiments

Hereinafter, a hydrogen production system according to embodiments of the present disclosure will be described with reference to the drawings. The embodiments which will be described below represent aspects of the present disclosure and do not limit the disclosure, and any change can be made within the scope of the technical idea of the present disclosure.

### (Embodiment 1)

### <Configuration of Hydrogen Production System according to Embodiment 1 of Present Disclosure>

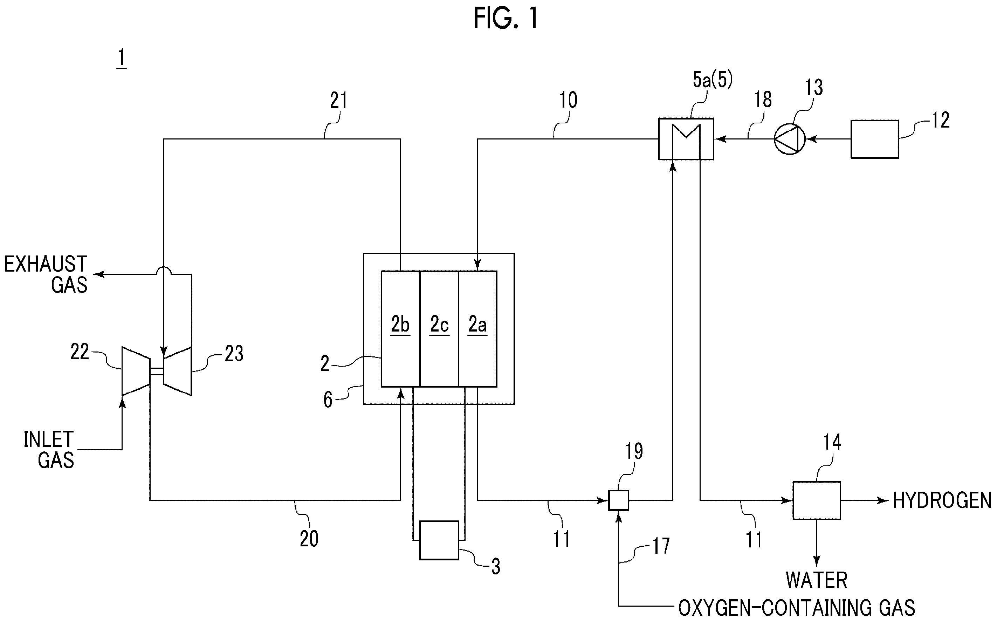

As illustrated in FIG. 1, a hydrogen production system 1 according to Embodiment 1 of the present disclosure includes a solid oxide electrolysis cell (SOEC) 2 that electrolyzes steam, a power supply device 3 that applies a voltage to the SOEC 2, and a steam generator 5 that generates steam to be supplied to the SOEC 2. The steam generator 5 includes a main heat exchanger 5a, and the main heat exchanger 5a is, for example, a boiler.

The SOEC 2 includes a hydrogen electrode 2a, an oxygen electrode 2b, and a solid electrolyte 2c provided between the hydrogen electrode 2a and the oxygen electrode 2b. Although only one SOEC 2 is illustrated in FIG. 1, a configuration in which a plurality of SOECs 2 are accommodated in a housing 6 may be adopted. The power supply device 3 is configured to apply a voltage between the hydrogen electrode 2a and the oxygen electrode 2b.

The hydrogen electrode 2a is connected to a steam supply line 10 through which the hydrogen electrode 2a and the main heat exchanger 5a communicate with each other, and a steam discharge line 11 through which steam discharged from the hydrogen electrode 2a passes. One end of a supply water line 18 that supplies water to the main heat exchanger 5a is connected to the main heat exchanger 5a, and the other end of the supply water line 18 is connected to a water supply source 12. A pump 13 is provided in the supply water line 18. The main heat exchanger 5a is configured to exchange heat between the supply water supplied from the water supply source 12 via the supply water line 18 and the steam passing through the steam discharge line 11.

A combustor 19 is provided in the steam discharge line 11. As will be described below, the steam passing through the steam discharge line 11 contains hydrogen, and the combustor 19 is for combusting a part of hydrogen contained in the steam passing through the steam discharge line 11. Therefore, an oxygen-containing gas supply line 17 for supplying an oxygen-containing gas such as air to the combustor 19, for example, is connected to the combustor 19. A condenser 14 may be provided on a downstream side of the main heat exchanger 5a in the steam discharge line 11.

A gas supply line 20 through which an oxygen-containing gas to be supplied to the oxygen electrode 2b, for example, air passes and a gas discharge line 21 through which exhaust gas discharged from the oxygen electrode 2b passes are connected to the oxygen electrode 2b. A compressor 22 that compresses the air may be provided in the gas supply line 20, and a power turbine 23 driven by the exhaust gas discharged from the oxygen electrode 2b is provided in the gas discharge line 21.

### <Operation of Hydrogen Production System according to Embodiment 1 of Present Disclosure>

Next, an operation of the hydrogen production system 1 according to

Embodiment 1 of the present disclosure will be described. Supply water supplied from the water supply source 12 is pressurized by the pump 13, passes through the supply water line 18, and is heated in the main heat exchanger 5a to become steam. The steam generated in the main heat exchanger 5a passes through the steam supply line 10, and flows into the hydrogen electrode 2a. On the other hand, air compressed by the compressor 22 passes through the gas supply line 20, and flows into the oxygen electrode 2b.

The power supply device 3 applies a voltage between the hydrogen electrode 2a and the oxygen electrode 2b, so that the steam in the hydrogen electrode 2a is electrolyzed to generate hydrogen and oxygen ions (O²⁻) (see Reaction Equation (1) below). The oxygen ions pass through the solid electrolyte 2c, and become oxygen at the oxygen electrode 2b (see Reaction Equation (2) below). The steam discharged from the hydrogen electrode 2a contains hydrogen generated by the electrolysis, and the steam containing the hydrogen passes through the steam discharge line 11. The exhaust gas discharged from the oxygen electrode 2b passes through the gas discharge line 21, flows into the power turbine 23, and drives the power turbine 23.

H₂O + 2e⁻ → H₂ + O²⁻ ··· (1)

2O²⁻ → O₂ + 4e⁻ ··· (2)

The steam (containing hydrogen) discharged from the hydrogen electrode 2a passes through the steam discharge line 11, and exchanges heat with the supply water pressurized by the pump 13 in the main heat exchanger 5a. In the main heat exchanger 5a, the supply water is heated to become steam, and the steam discharged from the hydrogen electrode 2a is cooled. The steam discharged from the main heat exchanger 5a passes through the steam discharge line 11, and flows into the condenser 14. In the condenser 14, the steam is condensed into water, so that water and hydrogen are separated into a gas and a liquid. The water condensed by the condenser 14 is subjected to wastewater treatment or reused by any device, and the hydrogen is sent to a hydrogen-consuming device or a hydrogen storage device (not illustrated).

In the main heat exchanger 5a, when only the supply water supplied from the water supply source 12 and the steam discharged from the hydrogen electrode 2a are subjected to heat exchange, there is a case where the amount of heat required for generating steam in the main heat exchanger 5a is insufficient when an attempt is made to increase the steam amount to be electrolyzed in the SOEC 2. In such a case, in Embodiment 1, in the combustor 19, a part of hydrogen contained in the steam discharged from the hydrogen electrode 2a is combusted. A temperature of the steam containing a combustion gas generated by the combustion of hydrogen in the combustor 19 is increased due to combustion heat of hydrogen. Therefore, the steam supplied to the main heat exchanger 5a is higher in temperature than in a case where hydrogen is not combusted in the combustor 19, and the steam amount generated by heat exchange with the supply water supplied to the main heat exchanger 5a can be increased. In this manner, it is possible to supply the required amount of steam to the SOEC 2. The temperature of the steam discharged from the combustor 19 can be regulated by regulating the amount of air supplied via the oxygen-containing gas supply line 17.

In this manner, in a case where the amount of heat required for generating steam in the steam generator 5 is insufficient, a part of hydrogen contained in the steam discharged from the hydrogen electrode 2a is combusted in the combustor 19, and the gas containing the combustion gas generated is heat-exchanged with the supply water. In this manner, the amount of generated steam can be increased. Therefore, in the SOEC 2, it is possible to suppress an increase in costs for the steam generator such as addition of an electric boiler and to expand a range of the steam amount that can be electrolyzed.

### <Modification Example of Hydrogen Production System according to Embodiment 1 of Present Disclosure>

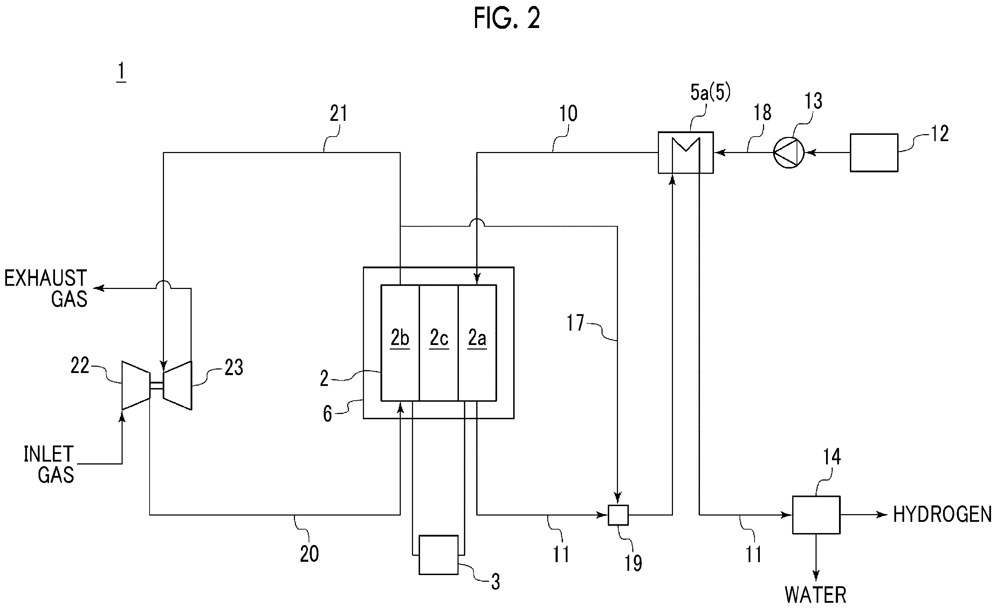

In Embodiment 1, the supply source of the oxygen-containing gas supplied to the combustor 19 is not specified. Meanwhile, the air in the atmosphere may be supplied to the combustor 19 by providing a compressor in the oxygen-containing gas supply line 17 and driving the compressor, or the oxygen-containing gas may be supplied to the combustor 19 from a storage tank of the oxygen-containing gas or a device for producing the oxygen-containing gas. In addition, as illustrated in FIG. 2, the oxygen-containing gas supply line 17 may be provided to communicate with the gas discharge line 21 and the combustor 19, and a part of an exhaust gas discharged from the oxygen electrode 2b may be supplied to the combustor 19 as the oxygen-containing gas. According to the configuration in FIG. 2, the exhaust gas having a high temperature (a temperature substantially the same as a temperature of the steam) can be used as the oxygen-containing gas. Therefore, the amount of hydrogen consumed by the combustor 19 to obtain the amount of heat required for generating the steam can be reduced. As a result, production costs of hydrogen in the hydrogen production system 1 can be reduced.

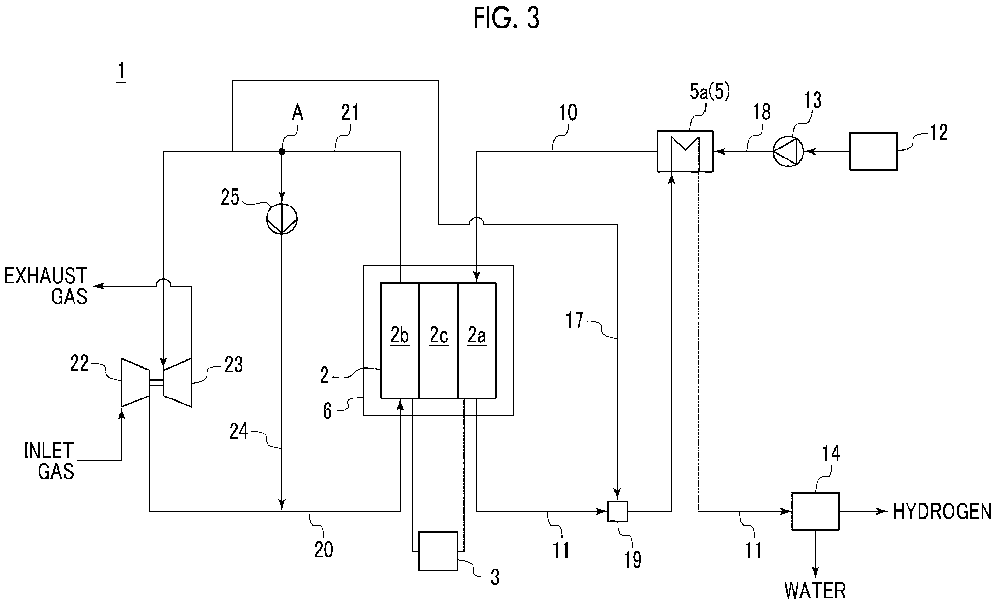

In addition, as an alternative configuration to the configuration in which a part of the exhaust gas discharged from the oxygen electrode 2b is supplied to the combustor 19 as the oxygen-containing gas, as illustrated in FIG. 3, in a case where an exhaust gas recirculation line 24 that allows the gas supply line 20 and the gas discharge line 21 to communicate with each other is provided and a booster 25 is provided in the exhaust gas recirculation line 24, for the purpose of circulating a part of the exhaust gas discharged from the oxygen electrode 2b through the oxygen electrode 2b, the oxygen-containing gas supply line 17 may be configured to branch from the gas discharge line 21 on a downstream side of a position A at which the exhaust gas recirculation line 24 branches from the gas discharge line 21. With such a configuration, the exhaust gas can be supplied to the combustor 19 while suppressing the influence on the exhaust gas circulation system (specifically, the exhaust gas passing through the exhaust gas recirculation line 24).

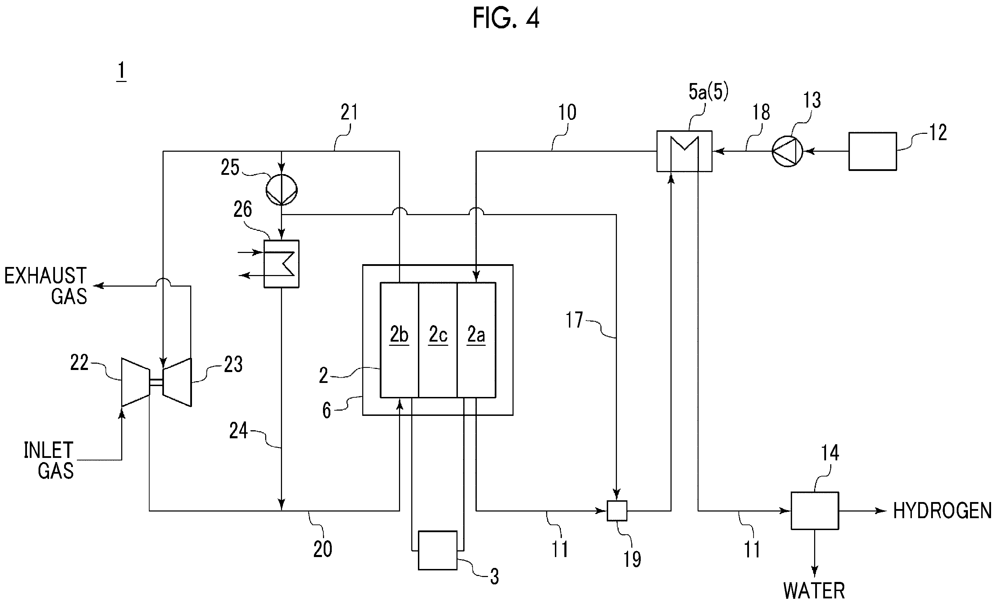

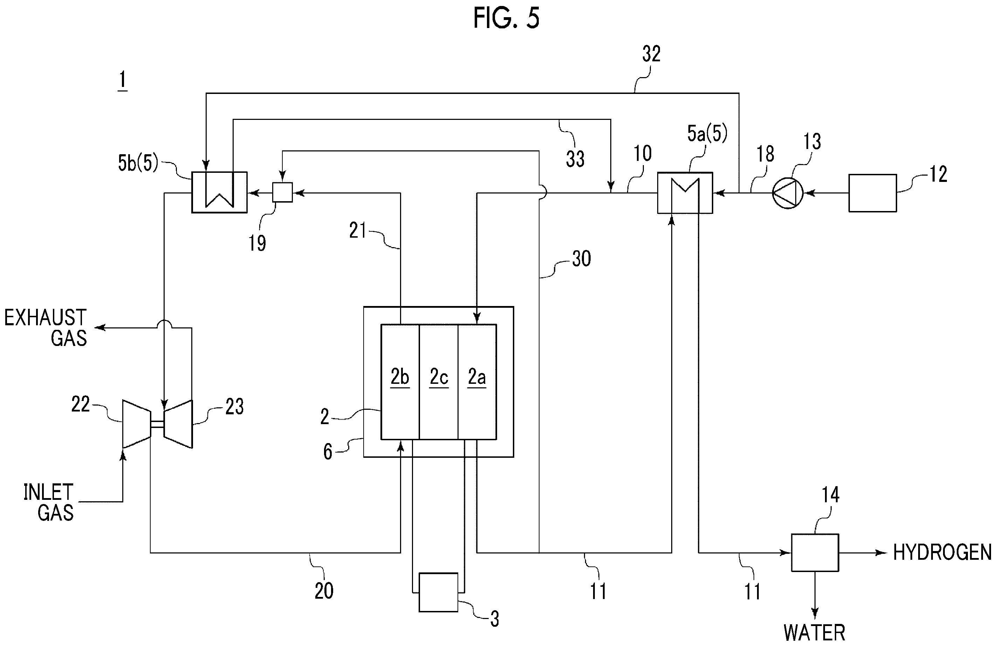

In addition, as illustrated in FIG. 4, the oxygen-containing gas supply line 17 may be configured to branch from the exhaust gas recirculation line 24 on a downstream side of the booster 25. According to this configuration, the exhaust gas in a state of being boosted by the booster 25 is supplied to the combustor 19. Therefore, it is not necessary to provide a compressor in the oxygen-containing gas supply line 17 to supply the exhaust gas to the combustor 19. In addition, in a case where a heat exchanger 26 for recovering heat from the exhaust gas is provided in the exhaust gas recirculation line 24 on the downstream side of the booster 25, the oxygen-containing gas supply line 17 may be configured to branch from the exhaust gas recirculation line 24 between the booster 25 and the heat exchanger 26. According to this configuration, the exhaust gas before being cooled in the heat exchanger 26 can be supplied to the combustor 19, so that the consumption amount of hydrogen in the combustor 19 can be suppressed. The heat exchanger 26 can also be used in the same manner as a first heat exchanger 5b illustrated in FIG. 5 of Embodiment 2 to be described below.

### (Embodiment 2)

Next, a hydrogen production system according to Embodiment 2 of the present disclosure will be described. The hydrogen production system according to Embodiment 2 is obtained by changing a position at which the combustor 19 is provided, as compared to Embodiment 1. Further, in Embodiment 2, the same components as those in Embodiment 1 are designated by the same reference signs, and the detailed descriptions thereof will not be repeated.

### <Configuration of Hydrogen Production System according to Embodiment 2 of Present Disclosure>

As illustrated in FIG. 5, in the hydrogen production system 1 according to Embodiment 2 of the present disclosure, the combustor 19 is provided in the gas discharge line 21. In order to supply a part of steam (hydrogen-containing gas) containing hydrogen discharged from the hydrogen electrode 2a to the combustor 19, a hydrogen-containing gas supply line 30 branching from the steam discharge line 11 is connected to the combustor 19.

The steam generator 5 includes the first heat exchanger 5b provided in the gas discharge line 21 on a downstream side of the combustor 19, in addition to the main heat exchanger 5a. The first heat exchanger 5b is for exchanging heat between a part of supply water supplied from the water supply source 12 and an exhaust gas passing through the gas discharge line 21. A supply water branch line 32 branching from the supply water line 18 on a downstream side of the pump 13 is connected to the first heat exchanger 5b to supply the part of the supply water supplied from the water supply source 12 to the first heat exchanger 5b. The steam is generated in the first heat exchanger 5b by an operation to be described below. Meanwhile, in order to supply the steam to the steam supply line 10, a steam line 33 through which the first heat exchanger 5b and the steam supply line 10 communicate with each other is provided. Other configurations are the same as those in Embodiment 1.

### <Operation of Hydrogen Production System according to Embodiment 2 of Present Disclosure>

Next, an operation of the hydrogen production system 1 according to Embodiment 2 of the present disclosure will be described. A part of supply water from the water supply source 12 passes through the supply water branch line 32, and flows into the first heat exchanger 5b, and the rest flows into the main heat exchanger 5a. In the main heat exchanger 5a, in the same manner as in Embodiment 1, the supply water is heated to become steam by exchanging heat between the steam discharged from the hydrogen electrode 2a and the supply water, and is discharged from the main heat exchanger 5a.

The supply water flowing into the first heat exchanger 5b is heated and becomes steam by exchanging heat with an exhaust gas that is discharged from the oxygen electrode 2b and that passes through the gas discharge line 21. The steam is discharged from the first heat exchanger 5b, passes through the steam line 33, flows into the steam supply line 10, and is mixed with the steam discharged from the main heat exchanger 5a to flow into the hydrogen electrode 2a. An operation of electrolyzing steam in the SOEC 2, an operation after the steam discharged from the hydrogen electrode 2a is heat-exchanged with the supply water in the main heat exchanger 5a, and an operation of supplying air to the oxygen electrode 2b have the same manner as the operations in Embodiment 1.

An operation for increasing the steam amount to be supplied to the SOEC 2 in Embodiment 2 is different from the operation in Embodiment 1. Next, the operation in Embodiment 2 will be described. In a case of increasing the steam amount, in Embodiment 2, in the combustor 19, hydrogen in the steam supplied to the combustor 19 via the hydrogen-containing gas supply line 30 is combusted using oxygen in the exhaust gas passing through the gas discharge line 21. Since a temperature of the supplied steam is approximately the same as a temperature of the exhaust gas, the temperature of the exhaust gas (combustion exhaust gas) generated by the combustion of hydrogen in the combustor 19 is increased due to the combustion heat of hydrogen. Therefore, the exhaust gas supplied to the first heat exchanger 5b becomes high in temperature as compared with a case where the hydrogen is not combusted in the combustor 19, and the steam amount generated by heat exchange with the supply water supplied to the first heat exchanger 5b can be increased. In this manner, it is possible to supply the required amount of steam to the SOEC 2. In addition, the temperature of the exhaust gas discharged from the combustor 19 can be regulated by regulating the amount of steam supplied via the hydrogen-containing gas supply line 30.

In this manner, as in Embodiment 1, a range of the steam amount that can be electrolyzed in the SOEC 2 can be widely covered in Embodiment 2. Meanwhile, in Embodiment 1, since the oxygen-containing gas is supplied to the steam discharged from the hydrogen electrode 2a, there is a probability that a purity of product hydrogen of the hydrogen production system 1 may be lowered. In contrast, in Embodiment 2, the configuration is made such that the oxygen-containing gas is not supplied to the steam passing through the steam discharge line 11 by supplying the steam bleed from the steam passing through the steam discharge line 11 to the combustor 19. Therefore, it is possible to prevent the purity of the product hydrogen of the hydrogen production system 1 from being lowered.

### <Modification Example of Hydrogen Production System according to Embodiment 2 of Present Disclosure>

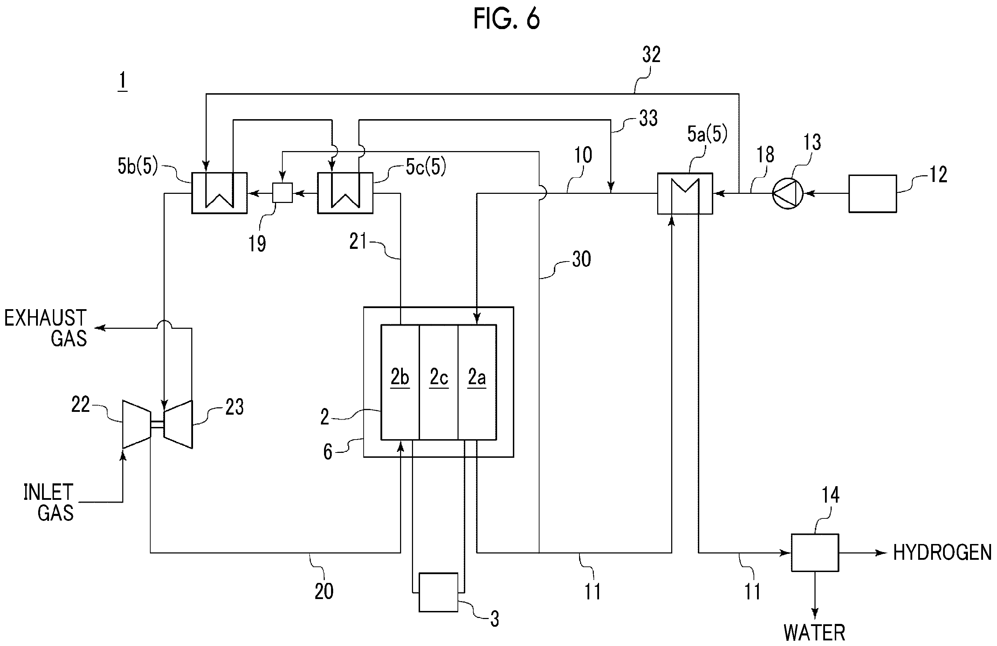

As illustrated in FIG. 6, as a part of a configuration of the steam generator 5, a second heat exchanger 5c that exchanges heat between a part of supply water supplied from the water supply source 12 and an exhaust gas passing through the gas discharge line 21 may be further provided on an upstream side of the combustor 19 in the gas discharge line 21. FIG. 6 illustrates a configuration in which the supply water supplied from the water supply source 12 exchanges heat with the exhaust gas in the first heat exchanger 5b, and then exchanges heat with the exhaust gas in the second heat exchanger 5c. Meanwhile, the present disclosure is not limited to this embodiment. A configuration may be adopted in which the supply water supplied from the water supply source 12 exchanges heat with the exhaust gas in the second heat exchanger 5c and then exchanges heat with the exhaust gas in the first heat exchanger 5b, or a configuration may be adopted in which the supply water supplied from the water supply source 12 is divided into two flows, and then the supply water is supplied to each of the first heat exchanger 5b and the second heat exchanger 5c, and steam generated in the first heat exchanger 5b and steam generated in the second heat exchanger 5c respectively merge with each other or flows into the steam supply line 10 separately.

In this configuration, the exhaust gas flowing into the combustor 19 is cooled by exchanging heat with water or steam in the second heat exchanger 5c. Therefore, a temperature of the exhaust gas flowing into the combustor 19 is lower as compared with the configuration in FIG. 5. When a temperature of a combustion gas generated in the combustor 19 becomes too high, the available combustion amount in the combustor 19 is limited due to a heat resistance of the combustor 19. Meanwhile, the available combustion amount in the combustor 19 can be increased by suppressing the temperature of the exhaust gas flowing into the combustor 19, so that a range of the steam amount that can be electrolyzed in the SOEC 2 can be further expanded.

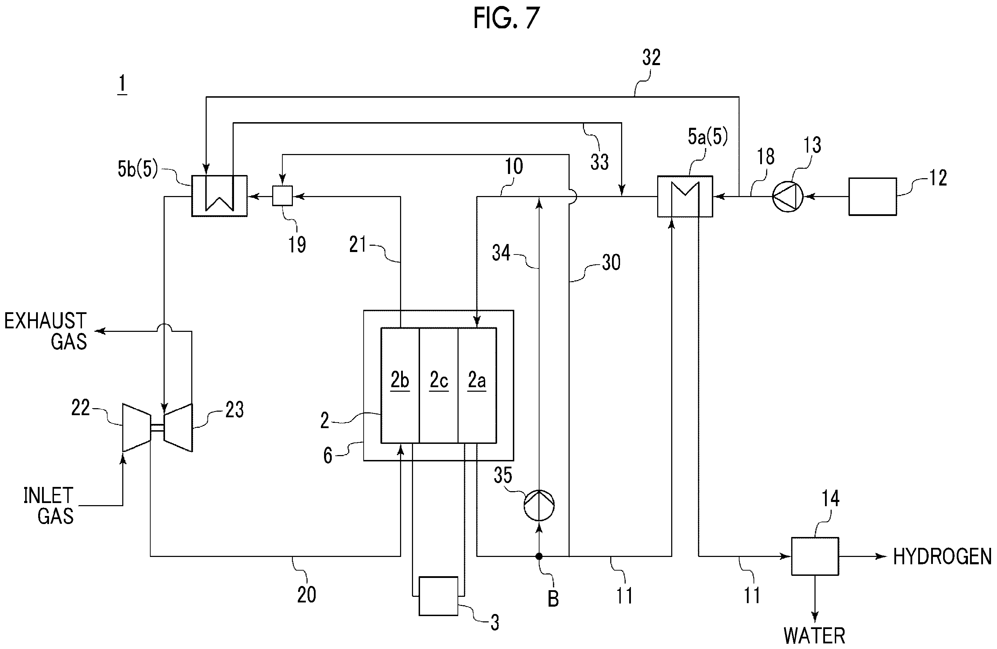

In a case where a steam recirculation line 34 that allows the steam supply line 10 and the steam discharge line 11 to communicate with each other is provided and a booster 35 is provided at the steam recirculation line 34, for the purpose of circulating a part of steam discharged from the hydrogen electrode 2a back to the hydrogen electrode 2a as illustrated in FIG. 7, the hydrogen-containing gas supply line 30 may be configured to branch from the steam discharge line 11 on a downstream side of a position B at which the steam recirculation line 34 branches from the steam discharge line 11. With such a configuration, hydrogen contained in the steam can be supplied to the combustor 19 without directly affecting the steam circulation system (specifically, the steam passing through the steam recirculation line 34).

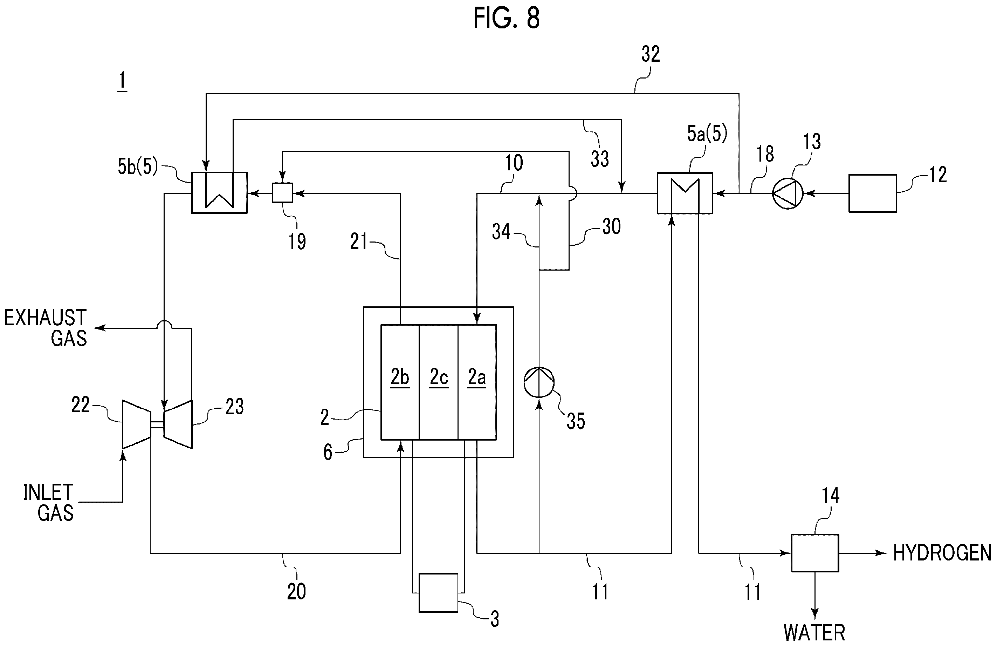

In addition, as illustrated in FIG. 8, the hydrogen-containing gas supply line 30 may be configured to branch from the steam recirculation line 34 on a downstream side of the booster 35. According to this configuration, the steam (hydrogen-containing gas) in a state of being boosted by the booster 35 is supplied to the combustor 19. Therefore, it is not necessary to provide a booster in the hydrogen-containing gas supply line 30 to supply the hydrogen to the combustor 19.

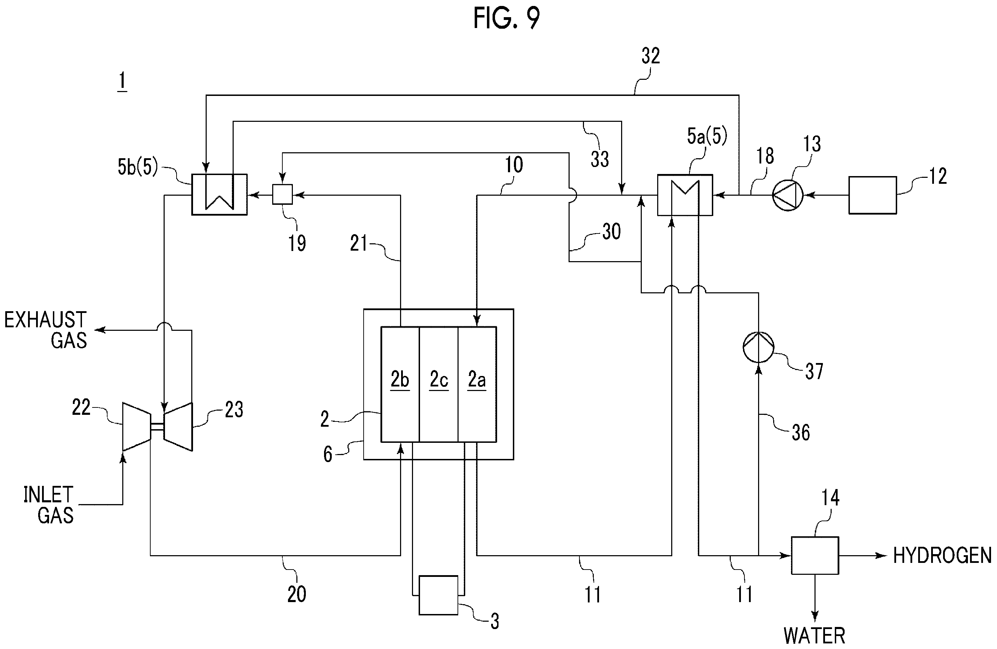

Further, in a configuration in which the hydrogen production system 1 includes a low-temperature steam recirculation line 36 that allows the steam discharge line 11 and the steam supply line 10 or an evaporator (not illustrated) in the main heat exchanger 5a to communicate with each other on a downstream side of the main heat exchanger 5a and a booster 37 provided in the low-temperature steam recirculation line 36, as illustrated in FIG. 9, if the hydrogen-containing gas supply line 30 is configured to branch from the low-temperature steam recirculation line 36 on a downstream side of the booster 37, as in the configuration in FIG. 8, steam in a state of being boosted by the booster 37 is supplied to the combustor 19. Therefore, it is not necessary to provide a compressor in the hydrogen-containing gas supply line 30 to supply the steam to the combustor 19. In addition, since the booster 37 is operated at a low temperature as compared with the booster 35 in FIG. 8, it is possible to reduce compression power or to reduce costs of a booster main body.

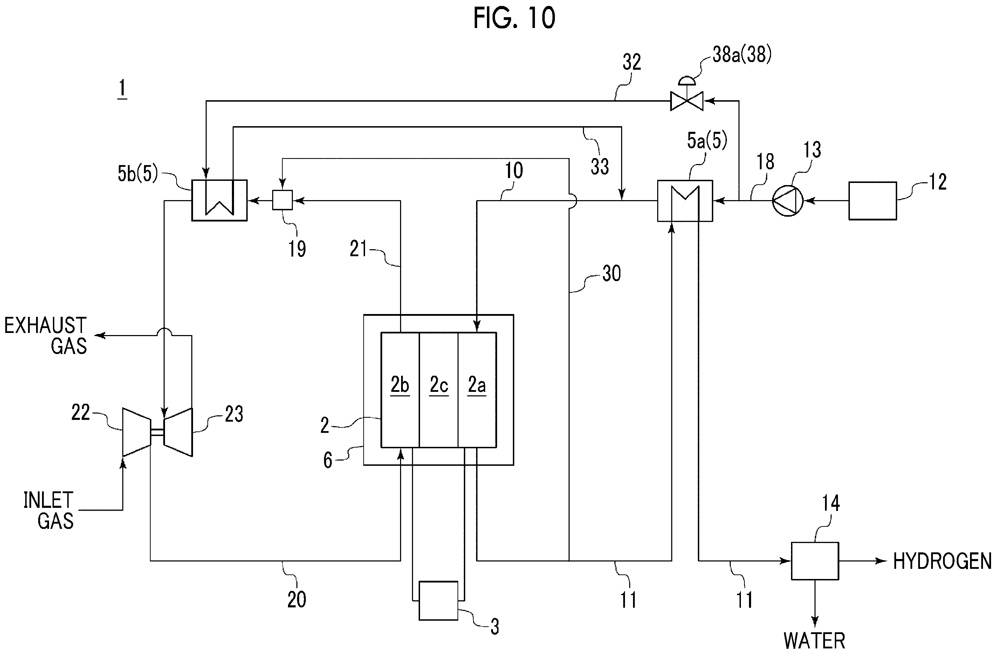

As illustrated in FIG. 10, a first flow rate regulation device 38 that regulates a flow rate of supply water supplied to the main heat exchanger 5a and a flow rate of supply water passing through the supply water branch line 32 may be provided for the supply water supplied from the water supply source 12. A configuration of the first flow rate regulation device 38 is not particularly limited, and may be, for example, a flow rate regulation valve 38a provided in the supply water branch line 32. In a case where the first flow rate regulation device 38 is a flow rate regulation valve, the flow rate regulation valve may be provided in the supply water line 18 on a downstream side of a position at which the supply water branch line 32 branches from the supply water line 18, instead of the supply water branch line 32, or the flow rate regulation valve may be provided in each of the supply water branch line 32 and the supply water line 18.

With such a configuration, by regulating the opening degree of the flow rate regulation valve 38a, each of the flow rate of the supply water supplied to the main heat exchanger 5a and the flow rate of the supply water passing through the supply water branch line 32 is regulated, and the amount of steam generated in each of the main heat exchanger 5a and the first heat exchanger 5b can be regulated. As a result, it is possible to appropriately supply the amount of steam required for the electrolysis of steam in the SOEC 2 while maximizing the use of the surplus heat generated in the hydrogen production system 1, even at a time of a low load or a load variation. In addition, when the first flow rate regulation device 38 is provided, a mechanism for regulating the flow rate of the supply water supplied to the main heat exchanger 5a may be provided, and the flow rate of the supply water may be regulated to be a flow rate required for the operation of the hydrogen production system 1, by the mechanism. In this manner, the steam amount generated in the main heat exchanger 5a and the first heat exchanger 5b can be individually regulated. A configuration of this mechanism is not particularly limited, and for example, in a case where the pump 13 is provided, the mechanism may be a device that regulates the discharge amount of the pump 13.

FIG. 10 illustrates a configuration in which the first flow rate regulation device 38 is provided in the configuration of Embodiment 2 (FIG. 5), but the present disclosure is not limited to this embodiment. Even in a configuration in which the first flow rate regulation device 38 is provided for the configuration of each modification example (FIGS. 6 to 9) of Embodiment 2, the same operation and effect can be obtained by the same operation.

### (Embodiment 3)

Next, a hydrogen production system according to Embodiment 3 of the present disclosure will be described. The hydrogen production system according to Embodiment 3 is different from Embodiment 1 in that the steam generator 5 includes a superheater for superheating the generated steam, and combustion heat generated by the combustor is used as a heat source of the superheater. Further, in Embodiment 1, the same components as those in Embodiment 1 are designated by the same reference signs, and the detailed descriptions thereof will not be repeated. In addition, the configuration of the modification example described in Embodiment 1 can be applied to Embodiment 3 as long as there is no contradiction in the configuration.

### <Configuration of Hydrogen Production System according to Embodiment 3 of Present Disclosure>

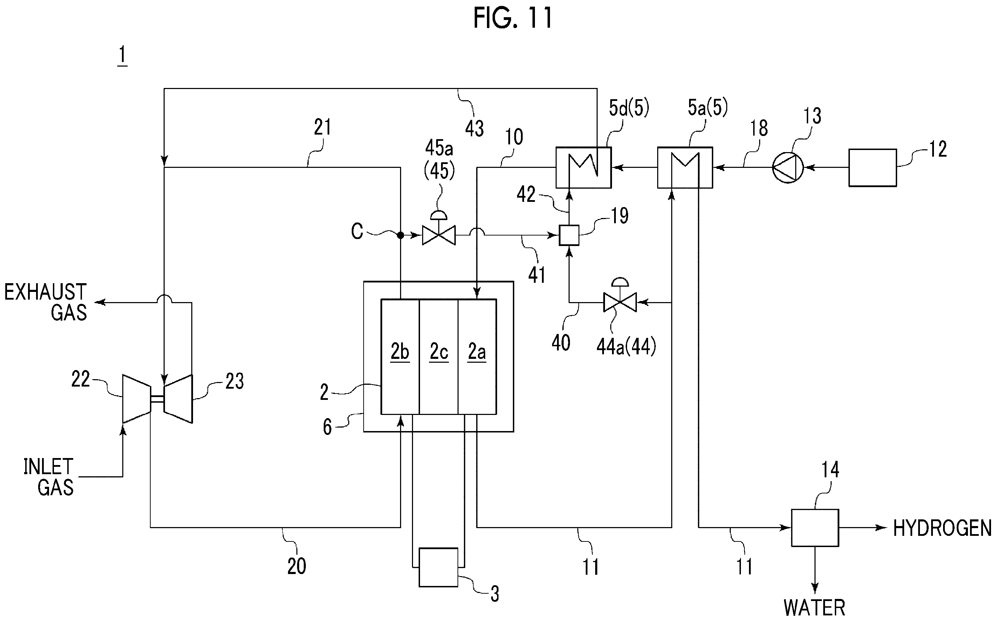

As illustrated in FIG. 11, in the hydrogen production system 1 according to Embodiment 3 of the present disclosure, the steam generator 5 includes the main heat exchanger 5a and a superheater 5d in which steam generated in the main heat exchanger 5a and a combustion gas generated in the combustor 19 are heat-exchanged. The combustor 19 is connected to each of a steam bleeding line 40 branching from the steam discharge line 11 and an exhaust gas bleeding line 41 branching from the gas discharge line 21. That is, the steam bleeding line 40 allows the steam discharge line 11 and the combustor 19 to communicate with each other, and the exhaust gas bleeding line 41 allows the gas discharge line 21 and the combustor 19 to communicate with each other. The combustor 19 communicates with the superheater 5d via a combustion gas supply line 42, and communicates with the gas discharge line 21 on a downstream side of a position C at which the exhaust gas bleeding line 41 branches from the gas discharge line 21 via a combustion gas discharge line 43.

The steam bleeding line 40 may be provided with a second flow rate regulation device 44 that regulates a flow rate of the steam passing through the steam bleeding line 40. Further, the exhaust gas bleeding line 41 may be provided with a third flow rate regulation device 45 that regulates a flow rate of the exhaust gas passing through the exhaust gas bleeding line 41. A configuration of each of the second flow rate regulation device 44 and the third flow rate regulation device 45 is not particularly limited, and for example, may be flow rate regulation valves 44a and 45a. Other configurations are the same as those in Embodiment 1.

### <Operation of Hydrogen Production System according to Embodiment 3 of Present Disclosure>

In the same manner as in Embodiment 1, in the main heat exchanger 5a, supply water is heated and becomes steam by exchanging heat between the supply water supplied from the water supply source 12 and steam discharged from the hydrogen electrode 2a. The steam discharged from the main heat exchanger 5a is further superheated into superheated steam by exchanging heat with a combustion gas generated in the combustor 19 by an operation to be described below in the superheater 5d. In Embodiment 3, a temperature of the steam flowing into the hydrogen electrode 2a can be further increased. Therefore, an operation condition of the SOEC 2 can be maintained within a desired range even during a low-load operation.

In Embodiment 3, to the combustor 19, a part of the steam passing through the steam discharge line 11 is supplied via the steam bleeding line 40 and a part of an exhaust gas passing through the gas discharge line 21 is supplied via the exhaust gas bleeding line 41, and hydrogen contained in the steam is combusted by oxygen contained in the exhaust gas. Since the supplied steam and the exhaust gas have substantially the same temperature, a temperature of the combustion gas (combustion exhaust gas) generated by the combustion of hydrogen in the combustor 19 is increased by the combustion of hydrogen. Therefore, the generated combustion gas (combustion exhaust gas) can superheat the steam by exchanging heat with the steam discharged from the main heat exchanger 5a in the superheater 5d, and the steam amount generated by exchanging heat between the supply water and the main heat exchanger 5a and the superheater 5d can be increased. The combustion gas that is heat-exchanged with the steam in the superheater 5d flows into the gas discharge line 21 via the combustion gas discharge line 43, and is mixed with the exhaust gas passing through the gas discharge line 21.

In a case where the flow rate regulation valve 44a is provided in the steam bleeding line 40, the temperature of the steam flowing into the hydrogen electrode 2a can be controlled to be a desired temperature by regulating the superheat degree of the steam in the superheater 5d by using the flow rate regulation valve 44a. Therefore, the operation condition of the SOEC 2 can be maintained in an optimal state. In a case where the flow rate regulation valve 45a is provided in the exhaust gas bleeding line 41 in addition to the flow rate regulation valve 44a, the temperature of the steam flowing into the hydrogen electrode 2a is further easily controlled by regulating the superheat degree of the steam in the superheater 5d by using the flow rate regulation valves 44a and 45a. Therefore, a stable operation can be performed even in a wider operating region of the SOEC 2.

### (Relationship between Steam Generator and Combustor of Present Disclosure)

In the present disclosure, in Embodiment 1, the steam generator 5 includes the main heat exchanger 5a, and in the main heat exchanger 5a, the supply water is heated and the steam is generated by exchanging heat between the supply water supplied from the water supply source 12 and the steam containing the combustion gas generated in the combustor 19. In Embodiment 2, the steam generator 5 has a configuration including the main heat exchanger 5a and the first heat exchanger 5b, or a configuration including the main heat exchanger 5a, the first heat exchanger 5b, and the second heat exchanger 5c. In the first heat exchanger 5b and the second heat exchanger 5c, the supply water is heated by exchanging heat between the supply water supplied from the water supply source 12 and the exhaust gas containing the combustion gas generated by the combustor 19 that combusts a part of the supply water and a part of the hydrogen contained in the steam discharged from the hydrogen electrode 2a, and the steam is generated. In Embodiment 3, the steam generator 5 includes the main heat exchanger 5a and the superheater 5d, and in the superheater 5d, the steam discharged from the main heat exchanger 5a and the combustion gas generated in the combustor 19 in which a part of the hydrogen contained in the steam discharged from the hydrogen electrode 2a is combusted are heat-exchanged with each other, so that the steam is further superheated to generate superheated steam flowing into the hydrogen electrode 2a. According to Embodiments 1 to 3, it can be said that in the hydrogen production system 1, the steam generator 5 is configured such that at least a part of the supply water (including the steam generated in the main heat exchanger 5a) is heated by exchanging heat between at least the part of the supply water and the gas containing the combustion gas generated in the combustor 19 in which a part of the hydrogen contained in the steam discharged from the hydrogen electrode 2a is combusted to generate at least a part of the steam is generated, so that the steam amount generated as a whole is increased.

The contents described in each embodiment described above are understood as follows, for example.
[1] According to one aspect, a hydrogen production system including;
   a solid oxide electrolysis cell (SOEC) (2) that electrolyzes steam;
   a steam generator (5) that generates the steam by heating supply water; and
   a combustor (19) that combusts a part of hydrogen contained in steam discharged from a hydrogen electrode (2a) of the SOEC (2),
   in which the steam generator (5) is configured such that at least a part of the supply water is heated to generate at least a part of the steam by exchanging heat between at least the part of the supply water and a gas containing a combustion gas generated in the combustor (19).
   With the hydrogen production system of the present disclosure, in a case where the amount of heat required for generating the steam is insufficient, a part of hydrogen contained in the steam discharged from the hydrogen electrode is combusted in the combustor, and the gas containing the combustion gas generated is heat-exchanged with at least the part of the supply water, so that the amount of generated steam is increased. Therefore, production costs of hydrogen produced by the electrolysis of the steam in the SOEC can be suppressed, and a range of the steam amount that can be electrolyzed can be expanded.
[2] According to a hydrogen production system according to another aspect, the hydrogen production system according to [1], further including:
   a steam discharge line (11) through which the steam discharged from the hydrogen electrode (2a) passes,
   in which the steam generator (5) includes a main heat exchanger (5a) that exchanges heat between the steam passing through the steam discharge line (11) and the supply water, and
   the combustor (19) is provided on an upstream side of the main heat exchanger (5a) in the steam discharge line (11).
   With such a configuration, in a case where the amount of heat required for generating the steam is insufficient, the supply water is further heated and the steam amount generated is increased by exchanging heat between the supply water and the gas containing the combustion gas generated in the combustor. Therefore, the range of the steam amount that can be electrolyzed in the SOEC can be expanded.
[3] According to a hydrogen production system according to still another aspect, the hydrogen production system according to [2], further including:
   a gas discharge line (21) through which an exhaust gas discharged from an oxygen electrode (2b) of the SOEC (2) passes; and
   an oxygen-containing gas supply line (17) that allows the gas discharge line (21) and the combustor (19) to communicate with each other.
   With such a configuration, the high-temperature exhaust gas can be used as an oxygen-containing gas required for the combustion of hydrogen. Therefore, the amount of hydrogen consumed in the combustor to obtain the amount of heat required for generating the steam can be reduced. As a result, production costs of hydrogen in the hydrogen production system can be reduced.
[4] According to a hydrogen production system according to still another aspect, the hydrogen production system according to [3], further including:
   a gas supply line (20) that supplies an oxygen-containing gas to the oxygen electrode (2b);
   an exhaust gas recirculation line (24) that allows the gas supply line (20) and the gas discharge line (21) to communicate with each other; and
   a booster (25) that boosts the exhaust gas passing through the exhaust gas recirculation line (24),
   in which the oxygen-containing gas supply line (17) branches from the gas discharge line (21) on a downstream side of a position (A) at which the exhaust gas recirculation line (24) branches from the gas discharge line (21).
   With such a configuration, the high-temperature exhaust gas can be further stably used in the combustor as the oxygen-containing gas required for combusting hydrogen even at a time of a low load or a load variation. Therefore, the amount of hydrogen consumed in the combustor to obtain the amount of heat required for generating the steam can be reduced. As a result, the production costs of hydrogen in the hydrogen production system can be reduced.
[5] According to a hydrogen production system according to still another aspect, the hydrogen production system according to [3], further including:
   a gas supply line (20) that supplies an oxygen-containing gas to the oxygen electrode (2b);
   an exhaust gas recirculation line (24) that allows the gas supply line (20) and the gas discharge line (21) to communicate with each other; and
   a booster (25) that boosts the exhaust gas passing through the exhaust gas recirculation line (24),
   in which the oxygen-containing gas supply line (17) branches from the exhaust gas recirculation line (24) on a downstream side of the booster (25).
   With such a configuration, even in a case where it is necessary to boost the oxygen-containing gas for increasing a pressure of the oxygen-containing gas to a pressure higher than a pressure of the gas discharge line when the oxygen-containing gas required for the combustion of hydrogen is supplied to the combustor, it is not necessary to separately provide a booster for boosting the oxygen-containing gas, and the exhaust gas as the oxygen-containing gas boosted by the booster provided in the exhaust gas recirculation line can be supplied to the combustor. Therefore, the production costs of hydrogen in the hydrogen production system can be reduced.
[6] According to a hydrogen production system according to still another aspect, the hydrogen production system according to [1], further including:
   a steam discharge line (11) through which the steam discharged from the hydrogen electrode (2a) passes; and
   a gas discharge line (21) through which an exhaust gas discharged from an oxygen electrode (2b) of the SOEC (2) passes,
   in which the steam generator (5) further includes a first heat exchanger (5b) that exchanges heat between at least the part of the supply water and the exhaust gas discharged from the oxygen electrode (2b),
   the combustor (19) is provided on an upstream side of the first heat exchanger (5b) in the gas discharge line (21), and
   the combustor (19) communicates with the steam discharge line (11) via a hydrogen-containing gas supply line (30).
   In the configurations of [2] to [5], the oxygen-containing gas is supplied to the steam discharged from the hydrogen electrode. Therefore, there is a probability that a purity of product hydrogen of the hydrogen production system may be decreased. In contrast, with the configuration of [4], the steam containing hydrogen bleed from the steam passing through the steam discharge line is supplied to the combustor. In this manner, the oxygen-containing gas is not supplied to the steam passing through the steam discharge line. Therefore, it is possible to prevent the purity of the product hydrogen of the hydrogen production system from being lowered.
[7] According to a hydrogen production system according to still another aspect, the hydrogen production system according to [6],
   in which the steam generator (5) further includes a second heat exchanger (5c) provided on an upstream side of the combustor (19) in the gas discharge line (21), and
   each of the first heat exchanger (5b) and the second heat exchanger (5c) is configured to exchange heat between at least the part of the supply water and the exhaust gas passing through the gas discharge line.
   With such a configuration, a temperature of the exhaust gas flowing into the combustor is lowered by cooling the exhaust gas by exchanging heat between the exhaust gas and the supply water in the second heat exchanger, as compared to the configuration according to [6]. When a temperature of the combustion gas generated in the combustor becomes too high, the available combustion amount in the combustor is limited due to a heat resistance of the combustor. Meanwhile, the available combustion amount in the combustor can be increased by reducing the temperature of the exhaust gas flowing into the combustor. Therefore, the amount of generated steam can be increased, and the range of the steam amount that can be electrolyzed in the SOEC can be further expanded.
[8] According to a hydrogen production system according to still another aspect, the hydrogen production system according to [6],
   in which the steam generator (5) includes a main heat exchanger (5a) that exchanges heat between at least the part of the supply water and the steam passing through the steam discharge line (11), and
   the hydrogen production system (1) further includes:
      a supply water line (18) that supplies the supply water to the main heat exchanger (5a);
      a supply water branch line (32) that allows the supply water line (18) and the first heat exchanger (5b) to communicate with each other;
      a steam supply line (10) that allows the main heat exchanger (5a) and the hydrogen electrode (2a) to communicate with each other;
      a steam line (33) that allows the first heat exchanger (5b) and the steam supply line (10) to communicate with each other; and
      a first flow rate regulation device (38) that regulates a flow rate of the supply water supplied to the main heat exchanger (5a) and a flow rate of the supply water passing through the supply water branch line (32).
   With such a configuration, the amount of heating of the supply water in each of the main heat exchanger and the first heat exchanger can be regulated. Therefore, while the surplus heat generated in the hydrogen production system is maximally used, the range of the steam amount that can be electrolyzed in the SOEC can be expanded, and even when the steam amount required for the electrolysis is increased, the steam can be secured.
[9] According to a hydrogen production system according to still another aspect, the hydrogen production system according to [7],
   in which the steam generator (5) includes a main heat exchanger (5a) that exchanges heat between at least the part of the supply water and the steam passing through the steam discharge line (11), and
   the hydrogen production system (1) further includes:
      a supply water line (18) that supplies the supply water to the main heat exchanger (5a);
      a supply water branch line (32) that allows the supply water line (18) to communicate with both the first heat exchanger (5b) and the second heat exchanger (5c);
      a steam line (33) that allows both the first heat exchanger (5b) and the second heat exchanger (5c) to communicate with the steam supply line (10); and
      a first flow rate regulation device (38) that regulates a flow rate of the supply water supplied to the main heat exchanger (5a) and a flow rate of the supply water passing through the supply water branch line (32).
   With such a configuration, the amount of heating of the supply water in each of the main heat exchanger, the first heat exchanger, and the second heat exchanger can be regulated. Therefore, while the surplus heat generated in the hydrogen production system operated under a wide operating condition can be further maximally used, the range of the steam amount that can be electrolyzed in the SOEC can be expanded, and the steam can be secured even when the steam amount required for the electrolysis is increased. The hydrogen-containing gas supply line (30) may be connected downstream of a branch point (B) of the steam recirculation line (34) connected to the steam discharge line (11) (refer to FIG. 7), or may be connected downstream of a booster (35) of a steam recirculation line (34) (refer to FIG. 8), or may be connected downstream of a booster (37) of a low-temperature steam recirculation line (36) connected downstream of the main heat exchanger (5a) (refer to FIG. 9).
[10] According to a hydrogen production system according to still another aspect, the hydrogen production system according to [1], further including:
   a steam discharge line (11) through which the steam discharged from the hydrogen electrode (2a) passes;
   a gas discharge line (21) through which an exhaust gas discharged from an oxygen electrode (2b) of the SOEC (2) passes;
   a steam bleeding line (40) that allows the steam discharge line (11) and the combustor (19) to communicate with each other; and
   an exhaust gas bleeding line (41) that allows the gas discharge line (21) and the combustor (19) to communicate with each other,
   in which the steam generator (5) includes
      a main heat exchanger (5a) that exchanges heat between the steam passing through the steam discharge line (11) and the supply water, and
      a superheater (5d) that exchanges heat between the steam generated in the main heat exchanger (5a) and the combustion gas generated in the combustor (19).
   With such a configuration, the temperature of the steam flowing into the hydrogen electrode can be further increased by superheating the steam generated by the steam generator in the superheater. Therefore, an operating temperature of the SOEC can be maintained within a desired range even during a low-load operation, and an increase in operating costs can be suppressed.
[11] According to a hydrogen production system according to still another aspect, the hydrogen production system according to [10], further including:
   a second flow rate regulation device (44) that is provided in the steam bleeding line (40) and that regulates a flow rate of the steam passing through the steam bleeding line (40).
   With such a configuration, by regulating the superheating of the steam in the superheater by the second flow rate regulation device, the temperature of the steam flowing into the hydrogen electrode of the SOEC can be easily controlled. Therefore, the operating temperature of the SOEC can be maintained within a desired range even during the low-load operation, and an increase in the operating costs can be suppressed.
[12] According to a hydrogen production system according to still another aspect, the hydrogen production system according to [11], further including:
   a third flow rate regulation device (45) that is provided in the exhaust gas bleeding line (41) and that regulates a flow rate of the exhaust gas passing through the exhaust gas bleeding line (41).
   With such a configuration, by regulating the superheating of the steam in the superheater by the second flow rate regulation device and the third flow rate regulation device, the temperature of the steam flowing into the hydrogen electrode of the SOEC can be further easily controlled, so that the SOEC can be stably operated in a wider operating region, and an increase in operating costs can be suppressed.
[13] According to a hydrogen production system according to one aspect, a method for operating the hydrogen production system according to [9], the method including:
   a step of causing the first flow rate regulation device (38) to regulate the flow rate of the supply water passing through the supply water branch line (32).
   With the method for operating the hydrogen production system of the present disclosure, the amount of steam generated in each of the main heat exchanger and the first heat exchanger can be regulated. Therefore, even at a time of a low load or a load variation, the amount of steam required for the electrolysis of steam in the SOEC can be appropriately supplied while maximizing the use of the surplus heat generated in the hydrogen production system.
[14] According to a hydrogen production system according to one aspect, a method for operating the hydrogen production system according to [11], the method including:
   a step of causing the second flow rate regulation device (44) to regulate a superheat degree of the steam in the superheater (5d).
   According to the method for operating the hydrogen production system of the present disclosure, the superheat degree of the steam in the superheater is regulated by the second flow rate regulation device, and thus the temperature of the steam flowing into the hydrogen electrode can be controlled to a desired temperature. Therefore, the operation condition of the SOEC can be maintained in an optimal state.
[15] According to a hydrogen production system according to one aspect, a method for operating the hydrogen production system according to [12], the method including:
   a step of causing the second flow rate regulation device (44) and the third flow rate regulation device (45) to regulate a superheat degree of the steam in the superheater (5d).

According to the method for operating the hydrogen production system of the present disclosure, a flow rate of the hydrogen gas-containing gas and a flow rate of the oxygen-containing gas are regulated by the second flow rate regulation device and the third flow rate regulation device to be supplied to the combustor in accordance with the superheat degree of the steam to be generated in the superheater, so that the temperature of the steam flowing into the hydrogen electrode is further easily controlled, and thus stable operation can be performed even in a wider operating region of the SOEC.

### Further aspects

The following numbered paragraphs disclose further aspects of the present invention.
1. A hydrogen production system comprising;
   a solid oxide electrolysis cell (SOEC) that electrolyzes steam;
   a steam generator that generates the steam by heating supply water; and
   a combustor that combusts a part of hydrogen contained in steam discharged from a hydrogen electrode of the SOEC,
   wherein the steam generator is configured such that at least a part of the supply water is heated to generate at least a part of the steam by exchanging heat between at least the part of the supply water and a gas containing a combustion gas generated in the combustor.
2. The hydrogen production system according to 1, further comprising:
   a steam discharge line through which the steam discharged from the hydrogen electrode passes,
   wherein the steam generator includes a main heat exchanger that exchanges heat between the steam passing through the steam discharge line and the supply water, and
   the combustor is provided on an upstream side of the main heat exchanger in the steam discharge line.
3. The hydrogen production system according to 2, further comprising:
   a gas discharge line through which an exhaust gas discharged from an oxygen electrode of the SOEC passes; and
   an oxygen-containing gas supply line that allows the gas discharge line and the combustor to communicate with each other.
4. The hydrogen production system according to 3, further comprising:
   a gas supply line that supplies an oxygen-containing gas to the oxygen electrode;
   an exhaust gas recirculation line that allows the gas supply line and the gas discharge line to communicate with each other; and
   a booster that boosts the exhaust gas passing through the exhaust gas recirculation line,
   wherein the oxygen-containing gas supply line branches from the gas discharge line on a downstream side of a position at which the exhaust gas recirculation line branches from the gas discharge line.
5. The hydrogen production system according to 3, further comprising:
   a gas supply line that supplies an oxygen-containing gas to the oxygen electrode;
   an exhaust gas recirculation line that allows the gas supply line and the gas discharge line to communicate with each other; and
   a booster that boosts the exhaust gas passing through the exhaust gas recirculation line,
   wherein the oxygen-containing gas supply line branches from the exhaust gas recirculation line on a downstream side of the booster.
6. The hydrogen production system according to 1, further comprising:
   a steam discharge line through which the steam discharged from the hydrogen electrode passes; and
   a gas discharge line through which an exhaust gas discharged from an oxygen electrode of the SOEC passes,
   wherein the steam generator further includes a first heat exchanger that exchanges heat between at least the part of the supply water and the exhaust gas discharged from the oxygen electrode,
   the combustor is provided on an upstream side of the first heat exchanger in the gas discharge line, and
   the combustor communicates with the steam discharge line via a hydrogen-containing gas supply line.
7. The hydrogen production system according to 6,
   wherein the steam generator further includes a second heat exchanger provided on an upstream side of the combustor in the gas discharge line, and
   each of the first heat exchanger and the second heat exchanger is configured to exchange heat between at least the part of the supply water and the exhaust gas passing through the gas discharge line.
8. The hydrogen production system according to 6,
   wherein the steam generator includes a main heat exchanger that exchanges heat between at least the part of the supply water and the steam passing through the steam discharge line, and
   the hydrogen production system further comprises:
      a supply water line that supplies the supply water to the main heat exchanger;
      a supply water branch line that allows the supply water line and the first heat exchanger to communicate with each other;
      a steam supply line that allows the main heat exchanger and the hydrogen electrode to communicate with each other;
      a steam line that allows the first heat exchanger and the steam supply line to communicate with each other; and
      a first flow rate regulation device that regulates a flow rate of the supply water supplied to the main heat exchanger and a flow rate of the supply water passing through the supply water branch line.
9. The hydrogen production system according to 7,
   wherein the steam generator includes a main heat exchanger that exchanges heat between at least the part of the supply water and the steam passing through the steam discharge line, and
   the hydrogen production system further comprises:
      a supply water line that supplies the supply water to the main heat exchanger;
      a supply water branch line that allows the supply water line to communicate with both the first heat exchanger and the second heat exchanger;
      a steam line that allows both the first heat exchanger and the second heat exchanger to communicate with the steam supply line; and
      a first flow rate regulation device that regulates a flow rate of the supply water supplied to the main heat exchanger and a flow rate of the supply water passing through the supply water branch line.
10. The hydrogen production system according to 1, further comprising:
   a steam discharge line through which the steam discharged from the hydrogen electrode passes;
   a gas discharge line through which an exhaust gas discharged from an oxygen electrode of the SOEC passes;
   a steam bleeding line that allows the steam discharge line and the combustor to communicate with each other; and
   an exhaust gas bleeding line that allows the gas discharge line and the combustor to communicate with each other,
   wherein the steam generator includes
      a main heat exchanger that exchanges heat between the steam passing through the steam discharge line and the supply water, and
      a superheater that exchanges heat between the steam generated in the main heat exchanger and the combustion gas generated in the combustor.
11. The hydrogen production system according to 10, further comprising:
   a second flow rate regulation device that is provided in the steam bleeding line and that regulates a flow rate of the steam passing through the steam bleeding line.
12. The hydrogen production system according to 11, further comprising:
   a third flow rate regulation device that is provided in the exhaust gas bleeding line and that regulates a flow rate of the exhaust gas passing through the exhaust gas bleeding line.
13. A method for operating the hydrogen production system according to 9, the method comprising:
   a step of causing the first flow rate regulation device to regulate the flow rate of the supply water passing through the supply water branch line.
14. A method for operating the hydrogen production system according to 11, the method comprising:
   a step of causing the second flow rate regulation device to regulate a superheat degree of the steam in the superheater.
15. A method for operating the hydrogen production system according to 12, the method comprising:
   a step of causing the second flow rate regulation device and the third flow rate regulation device to regulate a superheat degree of the steam in the superheater.

### Reference Signs List

1 Hydrogen production system
2 Solid oxide electrolysis cell (SOEC)
2a Hydrogen electrode
2b Oxygen electrode
5 Steam generator
5a Main heat exchanger
5b First heat exchanger
5c Second heat exchanger
5d Superheater
10 Steam supply line
11 Steam discharge line
12 Water supply source
13 Pump
17 Oxygen-containing gas supply line
18 Supply water line
19 Combustor
20 Gas supply line
21 Gas discharge line
24 Exhaust gas recirculation line
25, 35, 37 Booster
30 Hydrogen-containing gas supply line
32 Supply water branch line
33 Steam line
38 First flow rate regulation device
40 Steam bleeding line
41 Exhaust gas bleeding line
44 Second flow rate regulation device
45 Third flow rate regulation device

## Claims

1. A hydrogen production system (1), comprising:
a solid oxide electrolysis cell (SOEC) (2) that electrolyzes steam;
a steam discharge line (11) through which the steam discharged from the hydrogen electrode (2a) of the SOEC (2) passes;
a main heat exchanger (5a) that generates the steam by heating supply water through heat exchange between the supply water and the steam passing through the steam discharge line (11);
a combustor (19) that combusts a part of hydrogen contained in steam discharged from a hydrogen electrode (5a);
a superheater (5d) that exchanges heat between the steam generated in the main heat exchanger (5a) and the combustion gas generated in the combustor (19);
a gas discharge line (21) through which an exhaust gas discharged from an oxygen electrode (2b) of the SOEC (2) passes;
a steam bleeding line (40) that allows the steam discharge line (11) and the combustor (19) to communicate with each other; and
an exhaust gas bleeding line (41) that allows the gas discharge line (21) and the combustor (19) to communicate with each other.

2. The hydrogen production system (1) according to claim 1, further comprising:
a second flow rate regulation device (44) that is provided in the steam bleeding line (40) and that regulates a flow rate of the steam passing through the steam bleeding line (40).

3. The hydrogen production system (1) according to claim 2, further comprising:
a third flow rate regulation device (45) that is provided in the exhaust gas bleeding line (41) and that regulates a flow rate of the exhaust gas passing through the exhaust gas bleeding line (41).

4. A method for operating the hydrogen production system (1) according to claim 2, the method comprising:
a step of causing the second flow rate regulation device (44) to regulate a superheat degree of the steam in the superheater (5d).
